# EUROPEAN PATENT APPLICATION

(11) **EP 0 662 762 A2**
(43) Date of publication of application: **12.07.1995**
(21) Application number: 94309350.0
(22) Date of filing: 14.12.1994
(51) Int. Cl.: H04M 3/50, H04L 12/58

(54) **Voice mail network**

(30) Priority: 06.01.1994 US 178680
(71) Applicant: AT&T Corp., New York, NY 10013-2412 (US)
(72) Inventor: Anderl, Ewald Christoph, Middletown, New Jersey 07748 (US); Leikness, John M., Long Valley, New Jersey 07853 (US); Sanakkayala, Bhaskar N., Holmdel, New Jersey 07733 (US); Stephens, Glenn Alan, Belmar, New Jersey 07719 (US)
(74) Representative: Buckley, Christopher Simon Thirsk

(57) **Abstract**

A voice mail or messaging network is provided using a hub architecture. The hubs (40, 42, 44) provide a communication path between different voice mail systems (48, 50, 58), and translate the messages from the format of the transmitting voice mail system into the format of the receiving voice mail system. The hubs reduce the memory requirements of the voice mail systems composing the network by storing a directory containing the addresses of all users on the network.

## Description

### Cross-Reference to Related Applications

Related subject matter is disclosed in the applications filed concurrently herewith and assigned to the same assignee hereof entitled "Integrated Electronic Mailbox" and "Voice Mail Network Gateway".

### Background of the Invention

### Technical Field

The present invention relates to messaging; more specifically, a voice mail network.

### Description of the Prior Art

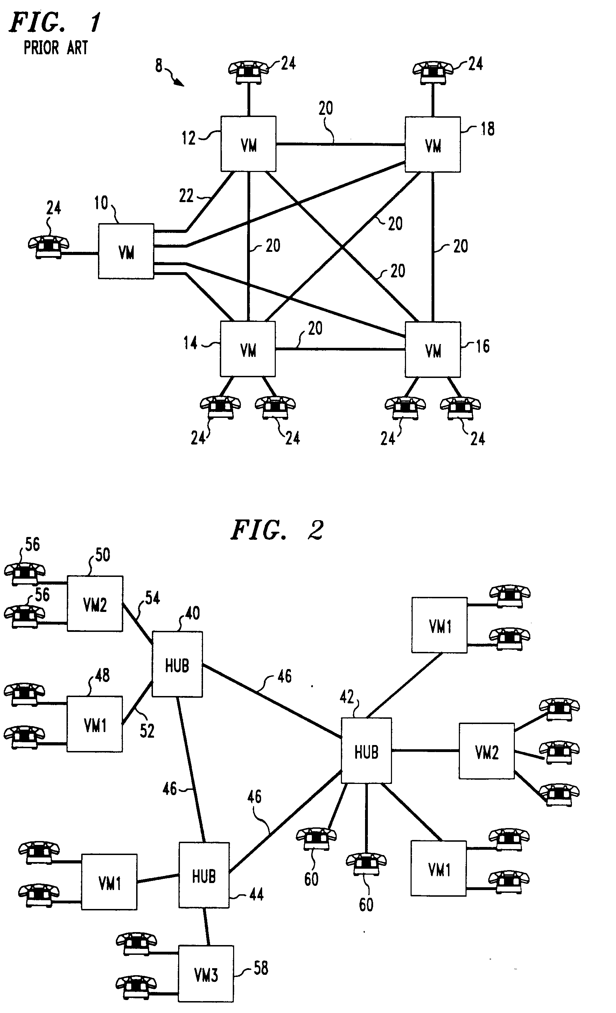

In the past, voice mail or messaging networks were connected using a point to point topology. FIG. 1 illustrates such a topology. Voice mail network 8 comprises voice mail or messaging systems 10, 12, 14, 16 and 18 which are connected in a point to point manner using links such as links 20 and 22. Link 20 may be a digital link using a well-known format or protocol such as TCP/IP (Transmission Control Protocol/Internet Protocol). It is also possible to connect voice mail systems using analog links such as link 22 which uses a well-known format or protocol such as AMIS (Audio Message Interface Specification). Each of the voice mail systems provide a voice mail service to subscribers which access the voice service through telephones 24. The voice mail systems can be systems such as those available from American Telephone and Telegraph Company, and sold under the trade name (AUDIX ®), or systems available from Octel Communication Corp. and VMX, Inc.

Each of the voice mail or messaging systems may provide functions such as answering a call and taking a message, forwarding a message, annotating and forwarding a message, playing a message, creating a new message, or deleting a message. Messages are exchanged between systems over links 20 or 22. The messages typically include a message body and a header, where the message body contains the voice message and the header contains the addressing information. Messages between voice mail systems may also include information such as delivery status and directory updates, where the directory contains information such as a destination address associated with the name of a particular addressee.

The network topology of FIG. 1 has several disadvantages. The voice mail systems composing the network may have been purchased from different vendors, where each vendor used a different format for messages. As a result, each of the voice mail systems may be required to translate messages from its own format into several other formats, and from several other formats into its own format. This requirement limits the size of voice mail networks, and the types of voice mail systems composing the network because many voice mail systems have limited or no ability to translate message formats.

An additional disadvantage of a point to point topology is that each of the voice mail systems have a directory for all other users on the network. This requires an excessive amount of memory for each of the voice mail systems.

### Summary of the Invention

An embodiment of the present invention provides a hub architecture. The hub architecture includes a plurality of voice mail or messaging systems connected to a hub which provides a communication path to other voice mail systems directly or via other hubs. The hubs provide a means for translation between differing formats of different voice mail systems, and thereby permit forming large voice mail networks composed of voice mail systems with many different message formats. In addition, the hubs reduce the amount of storage needed for directories in each of the voice mail systems by storing a directory containing the addresses of users on the network.

### Brief Description of the Drawing

FIG. 1 is a block diagram of a network using a point to point architecture;
FIG. 2 is a block diagram of a network using a hub architecture;
FIG. 3 is a functional diagram of a hub;
FIG. 4 is a hardware block diagram of a hub;
FIG. 5 is a block diagram illustrating the hierarchical relationship of the programs executed by the hub's processor;
FIG. 6 is a software functional block diagram of FIG. 5's hub functions block; and
FIG. 7 illustrates a hub architecture connecting several hub networks.

### Detailed Description

FIG. 2 illustrates a network with a hub architecture. Hub 40, 42 and 44 are connected using data links 46. Data links 46 may be digital data links using a format or protocol such as TCP/IP, or they may be analog, optical or wireless links. Connected to each of the hubs are voice mail or messaging systems. The voice mail systems connected to the hubs may be, for example, voice mail systems available from American Telephone and Telegraph Company, Octel or VMX. Voice mail systems 48 and 50 are connected to hub 40 over data links 52 and 54, respectively. The characteristics of data link 52 are dictated by the format used by voice mail system 48. Likewise, the characteristics of link 54 are dictated by the format used by voice mail system 50. Connected to each of the voice mail systems are communication terminals 56. Communications terminal 56 may be a simple telephone that receives the voice mail messages or services; however, it is also possible to use a computer terminal. A computer terminal is useful when voice mail systems 48 or 50 provide fax messages, e-mail messages, video messages, data messages, or image messages. It is also possible to use a multi-media terminal as terminal 56 when voice mail systems 48 or 50 provide multi-media or voice and video messages.

When a terminal 56 communicates with a terminal on another voice mail system, the message passes through the hub or hubs that provide a communication path between the terminals; however, when a terminal 56 communicates with another terminal connected to the same voice mail system, the communication may take place without passing the message through a hub.

When the message passes through a hub, the hub performs the necessary format conversions. For example, if the message is sent from voice mail system 50 to voice mail system 48, hub 40 converts the message from the format used by system 50 into the format used by system 48. When a message passes through more than one hub, several format conversions may be executed. For example, if a message is sent from a terminal connected to voice mail system 50 to a terminal connected to voice mail system 58, hub 40 converts the message from the format used by system 50 to the format used by data link 46, and hub 44 converts the message from the format used by data link 46 to the format used by voice mail system 58.

Each of the hubs are used to provide a directory that covers all of the users on the entire network rather than requiring each voice mail system to store a directory for the entire network. In this embodiment, each voice mail system only stores a directory of its local users, that is, the users identified with terminals 56 attached to the voice mail system. In addition, a voice mail system may include a subset of the network wide directory which is downloaded from the hub that is connected to the voice mail system. Downloading the directory enables the voice mail system to provide "name addressing" and/or "voice name back addressing". "Name addressing" enables a user to send a message to a receiver by using just the addressee's name, and "voice name back addressing" provides the sender with the addressee's name to verify that a correct address has been entered into the system. It is also possible to provide an additional decrease in the memory requirements of the voice mail systems by removing the local directories from the voice mail systems. In this embodiment, the voice mail systems use the hub's directory even when the sending and receiving terminals are on the same voice mail system. When the local directory is removed from the voice mail system, it is advisable to provide a high speed link between the voice mail system and the local hub to ensure appropriate response times.

It is also possible for a hub to provide voice mail services to user terminals 60. In this situation, the software application used to provide the voice mail function may be executed by the same hardware that is used to provide the hub function.

When the messages sent to or from a terminal are messages such as fax messages, e-mail messages, video messages, data message, image messages or multimedia messages, the messages may be processed by the hubs and sent over the data links in the same way that voice messages are communicated. If a variety of message types are communicated, it may be desirable to use several bits in the message body or message header to indicate the type of message to the receiving terminal.

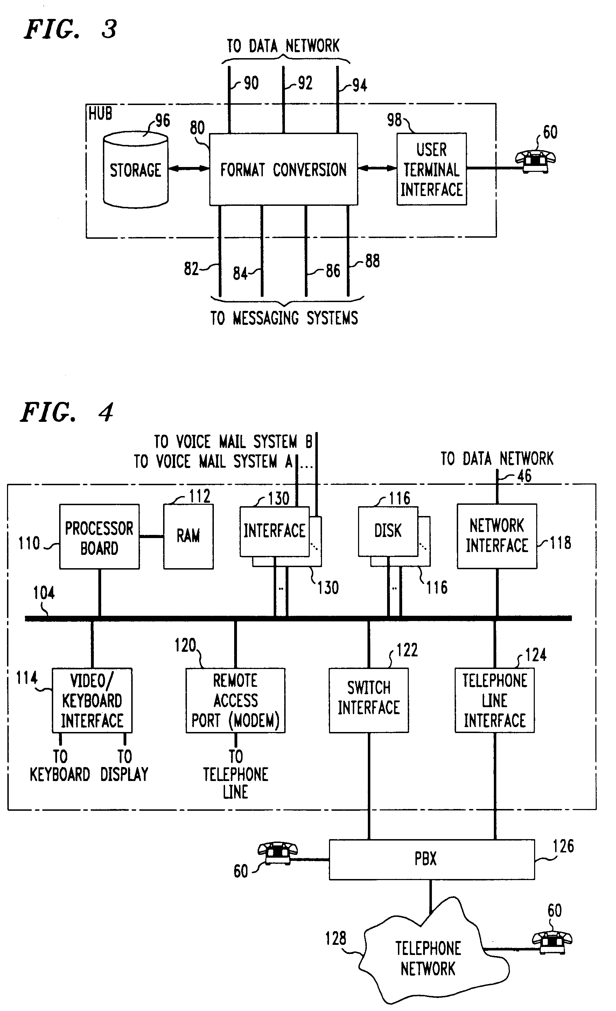

FIG. 3 is a functional block diagram of a hub. Interface/format conversion function 80 provides communication between the different inputs and outputs of the hub. For example, if input/output (I/O) 82 is connected to a voice mail system using an AMIS analog format, function 80 converts messages received on I/O 82 from AMIS format to formats used by other voice mail systems or data links that are connected to the hub's inputs/outputs. For example, a message in AMIS format may be converted to a low speed digital format used by I/O 54, a high speed digital format used by I/O 86, or a LAN format such as TCP/IP used by I/O 88. Similarly, messages sent to I/O 82 are converted from the format associated with the receiving I/O to AMIS format. When communicating with other hubs, a message received at any of the inputs/outputs may be converted to formats such as a digital format used by network interconnect 90, an analog format used by network interconnect 92 or a LAN format used by network interconnect 94. It is also possible for function 80 to provide conversions to or from formats such as optical formats and wireless formats.

The hub also comprises storage unit(s) 96 which is used to store information such as the directory of users on the entire network and application programs. When the hub is used as a voice mail or messaging system that connects to user terminal 60, interface 98 provides an interface to the user's terminal.

FIG. 4 is a hardware block diagram of a hub. The hub comprises several electronic cards and storage devices that communicate over standard bus 104 which may be a bus such as a EISA bus that is used by many of the widely-available PCs. The electronic cards and/or storage devices are available from many services. For example, processor cards are available from Intel Corporation; storage devices are available from Seagate Technologies, Inc., and telephone line interface cards are available from American Telephone and Telegraph Company.

The processing tasks are handled by processor card 110 which includes a microprocessor such as an Intel 80486 processor that uses a high speed clock such as a 50 Mhz clock. System memory used by processor card 110 is provided on memory card 112 which communicates with processor card 110 directly or over bus 104. Memory card 112 may contain a convenient amount of memory such as 64 megabytes. It is also possible to eliminate memory card 112 by placing the memory on processor card 110. Video/keyboard interface card 114 is used to provide an interface between card 110, and a monitor and keyboard used by a local administrator. Directory and application software storage are provided by disk drives 116. Disk drives 116 may be one large optical drive or several of the widely-available magnetic drives or tape drives. For a network involving approximately 5,000 users, it is desirable to have storage capability on the order of 3 gigabytes. Interface card 118 is used to provide an interface between bus 104 and datalinks 46 that connect the hubs into a network. This interface is used to provide the electrical interfaces between bus 104 and links 46. The formatting required for the communication over links 46 is carried out by processor card 110. It is also possible to include serial port card 120 which receives inputs and transmits outputs over a conventional telephone line using a modem. This provides the capability for remote access to processor 110 for diagnostics and upgrades.

When the hub is used to provide voice mail functions such as in the case of hub 42, switch interface card 122 and telephone interface card 124 are included. These cards communicate with processor card 110 over bus 104. Switch interface card 122 is used to control telephone switching that provides communication paths to user terminals 60. The switching usually occurs through a device such as PBX 126 and/or telephone network 128. Telephone interface card 124 is used to provide communication between bus 104 and the tip and ring lines that compose a conventional telephone line. It is possible to replace card 124 with an interface card that interfaces bus 104 to a communication link that supports messages such as video, sound, image, fax, e-mail, data and/or voice messages. It is also possible for processor card 110 to use compression techniques to enable passing messages such as multi-media or voice and video messages over conventional telephone lines.

Interface card(s) 130 provides an interface between bus 104 and a communication link to a voice mail system. For example, interface card(s) 130 may be used to interface bus 104 to communication paths using fiber optics, coaxial or wireless links. The formatting required by the communication link is carried out by processor card 110.

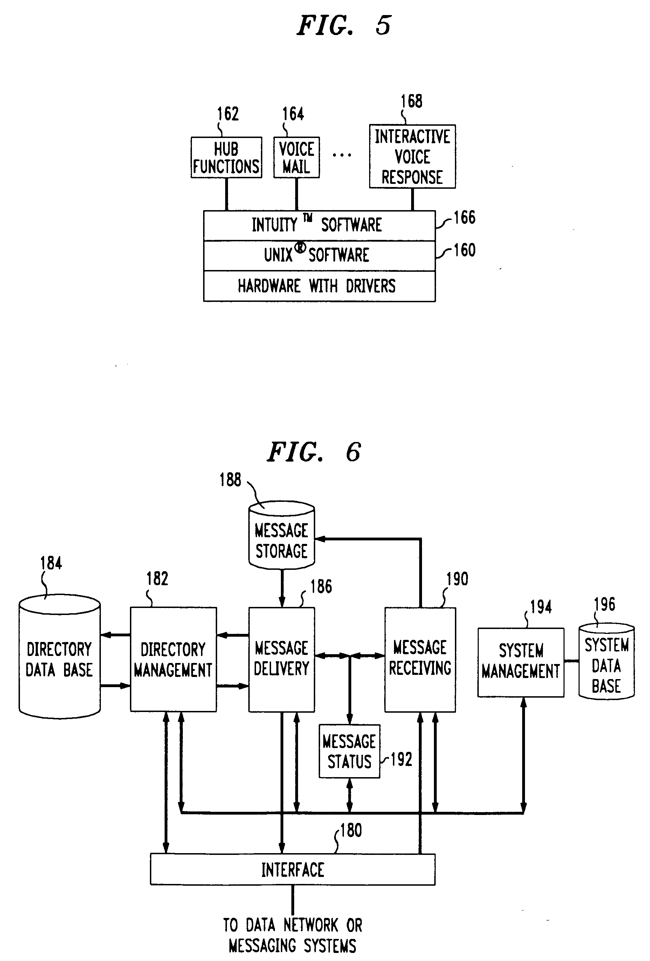

FIG. 5 is a software block diagram illustrating the hierarchical relationship of the programs executed by the hub's processor. Operating system software layer 160 is used to provide communication between the hardware used to perform the functions of the hub and higher level software programs that use the hardware. Layer 160 also controls timesharing of the processor and other hardware by the higher level software applications. Layer 160 may be implemented using operating system software such as software sold under the trade name (UNIX®) and driver software that is provided by the manufacturers of the electronic cards or hardware used to construct the hub. The hub function software 162 and application software functions such as voice mail software 164, interface with layer 160 and communicate with other hubs using software layer 166. Voice mail software 164 may be a voice mail application such as voice mail application software available under the trade name (INTUITY™ AUDIX®) application from American Telephone and Telegraph Company. Software layer 166 may be a software package such as a package available under the trade name (INTUITY™) System from American Telephone and Telegraph Company. The hub functional software block 162 performs functions such as format conversions, alternate routing when a particular network link becomes inoperative, user directory updates, message and directory transfers between hubs or between a hub and a voice mail system, and security functions to provide password protection of access to voice mail systems. It is also possible to provide other applications such as application block 168 which provides interactive voice response to users. An interactive voice response application may be an application such as an application available under the trade name (CONVERSANT®) from American Telephone and Telegraph Company.

FIG. 6 is a block diagram illustrating one of several possible implementations of the functions carried out by hub function software 162 of FIG. 5. Each of the blocks of FIG. 6 illustrate a software module that performs a function; however, several functions may be combined into one module.

Block 180 is an interface module that is used to provide a network address to a message that will be passed along a link to a hub or voice mail system. The address used by interface module 180 is obtained using directory management module 182. This module accesses the subscriber directory database 184 to provide the proper network address for a subscriber name or telephone number. Module 182 passes the address to module 186. Message delivery module 186 accesses message storage database 188 and provides the message data and network address to network interface module 180.

Messages received from links to a hub or voice mail system are received by interface module 180. Interface module 180 then provides the message to message receipt module 190. Message receipt module 190 stores the message in message database 188 with addressing information such as the sender's address and the recipient's address. Module 192 is used to provide message status. This module monitors messages received by message receipt module 190, and messages delivered by message delivery module 186. As a result, it keeps track of which messages have been received and which have been delivered. When requested via message receipt module 190, message status module 192 provides a status message to the requester through message delivery module 186.

Module 180 is also used to provide directory updates to other hubs on the network and to voice mail systems that are connected to the hub. When another hub or a voice mail system requests an exchange of subscriber or user directory information, module 180 uses subscriber directory management module 182 to provide subscriber information from database 184 to the requesting device. In addition, module 182 requests subscriber or user directory updates from other hubs or from voice mail systems connected to the hub on a periodic basis. For example, module 182 may request an update on a daily basis. Module 182's request is passed to a voice messaging system or another hub by module 180. Module 180 passes the directory information provided in response to the request to module 182, which uses the information to update data base 184.

Management/administrator module 194 and its associated database 196 provide overall control to the aforementioned modules. This provides control over information provided by modules 182, 186, 190 and 192 in accordance with passwords and other security functions. Database 196 is used to store information such as passwords.

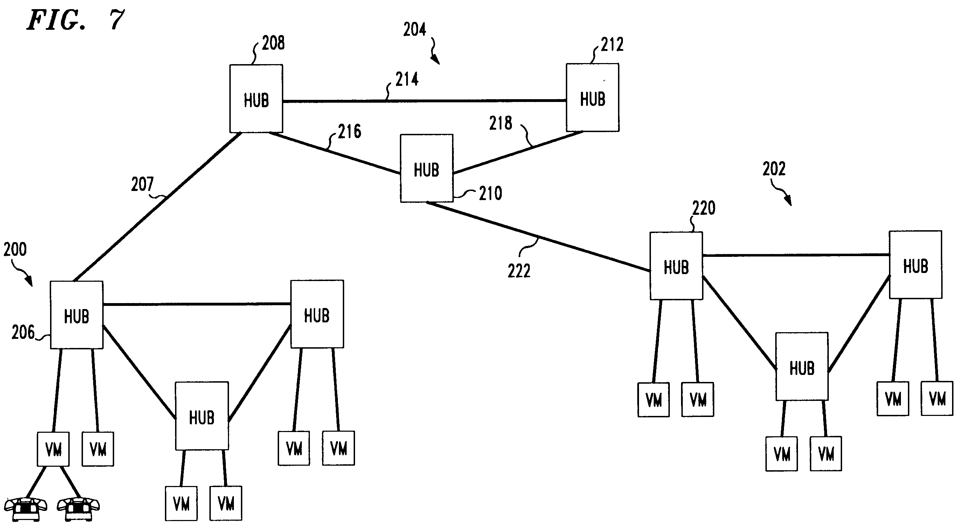

FIG. 7 illustrates a hub architecture connecting several hub networks. Hub network 200 is connected to hub network 202 using higher level hub network 204. In this embodiment, hub 206 of hub network 200 is connected to hub 208 of network 204 using link 207. Link 207 is a high speed digital link such as a link using TCP/IP format. Hub 208 communicates with other hubs on network 204, such as hubs 210 and 212, using links 214, 216 and 218. Hub 206 may communicate with hub 220 of network 202 through hub network 204. Hub 206 communicates over link 207 to hub 208 which then communicates with hub 210 over link 216. Hub 210 then provides communication to hub 220 using link 222. Link 222 may be the same type of link as link 207. In this manner, a voice mail system on hub network 200 can communicate with a voice mail system on hub network 202 In an application where networks 200 and 202 contain proprietary information, it is possible to provide security and password safeguards at the hubs that interface to hub network 204 in order to provide security for the proprietary information.

## Claims

1. A messaging network, characterized by:
a first hub having a first port, a second port, message communication means for providing communication between said first port and said second port, and translation means for translating a message from a first format into a second format;
a first messaging system using said first message format to communicate with said first port; and
a second messaging system using said second message format to communicate with said second port.

2. The messaging network of claim 1, characterized in that said first hub comprises storage means for storing a directory of message system user addresses.

3. The messaging network of claim 1, characterized in that said first hub comprises storage means for storing a message received from said first messaging system.

4. The messaging network of claim 3, characterized in that said communication means forwards said stored message to said second messaging system.

5. The messaging network of claim 1, characterized in that said first hub comprises a third port in communication with a second hub.

6. The messaging network of claim 1, characterized in that said first hub comprises a third port in communication with a user terminal.

7. The messaging network of claim 1, characterized in that said first hub communicates with said user terminal through a PBX.

8. The messaging network of claim 1, characterized in that said first hub comprises a modem.

9. A method for providing communication between voice messaging systems having differing message formats characterized by the steps of:
using a first voice messaging system having a first message format to communicate with a first port of a hub;
using a second voice messaging system having a second message format to communicate with a second port of said hub;
translating a voice message in said first message format into said second message format in said hub; and
communicating said voice message from said first port to said second port.

10. The method of claim 9, further characterized by the step of storing a directory of message system user addresses in said hub.

11. The method of claim 9, further characterized by the step of using a third port of said hub to communicate a second voice message from said first port to a user terminal.
